# EUROPEAN PATENT APPLICATION

(11) **EP 4 831 818 A1**
(43) Date of publication of application: **28.10.2026**
(21) Application number: 26170006.6
(22) Date of filing: 31.03.2026
(51) Int. Cl.: G06F 13/16

(54) **A MEMORY CONTROLLER AND A METHOD FOR OPERATING THE SAME**

(30) Priority: 25.04.2025 KR 20250054755
(71) Applicant: Samsung Electronics Co., Ltd., Suwon-si, Gyeonggi-do 16677 (KR)
(72) Inventor: LEE, Hanul, Suwon-si (KR); KIM, Wooil, Suwon-si (KR); BAEK, Seungcheol, Suwon-si (KR)
(74) Representative: Marks & Clerk LLP

(57) **Abstract**

A memory controller includes a request queue that enqueues a first request among a requests received from a host into a first entry of plural entries, and a queue logic circuit that controls the request queue to add the first request to the first entry as a child request, based on determining that a parent request having attribute information that is the same as attribute information of the first request already exists in the first entry.

## Description

### BACKGROUND

The present disclosure relates to a memory controller, a method for operating the memory controller, and a memory system.

Memory devices such as a dynamic random access memory (DRAM) may have a memory cell array for storing data. The arrangement of the memory cell array is implemented as a grid divided into rows and columns, and data may be read or written by accessing cells by specifying addresses for rows and columns. A collection including at least some of a plurality of memory cell arrays may be defined as a bank.

DRAM controllers utilize bank parallelism to maximize the performance of the memory system. To handle more requests simultaneously from a plurality of banks, the capacity of the request queue of the memory controller may be increased so that more requests may be enqueued in the request queue, but this increased capacity may cause problems such as increased area.

### SUMMARY

It is an aspect to provide a memory controller, a method for operating the memory controller, and a memory system capable of efficiently managing requests from a host by improving the capacity of a request queue.

According to an aspect of one or more embodiments, there is provided a memory controller comprising a request queue configured to enqueue a first request among a plurality of requests received from a host into a first entry of a plurality of entries; and a queue logic circuit configured to control the request queue to add the first request to the first entry as a child request, based on determining that a parent request having attribute information that is the same as attribute information of the first request already exists in the first entry.

According to another aspect of one or more embodiments, there is provided a method for operating a memory controller, the method comprising enqueuing a first request and a second request among a plurality of requests received from a host into a request queue including a plurality of entries; determining whether a parent request having attribute information that is the same as attribute information of the first request already exists in the request queue; adding the first request as a child request to a first entry of the plurality of entries based on determining that the parent request having the attribute information that is the same as the attribute information of the first request exists in the first entry; determining whether a parent request having attribute information that is the same as attribute information of the second request exists in the request queue; and storing the second request as a parent request in a second entry subsequent to the first entry among the plurality of entries based on determining that the parent request having the attribute information that is the same as the attribute information of the second request does not exist in the request queue.

According to yet another aspect of one or more embodiments, there is provided a memory system comprising a memory device including a plurality of banks, each of the plurality of banks including a plurality of rows and a plurality of columns; and a memory controller configured to manage access requests to the memory controller. The memory controller is configured to store a first access request for a first row and a first column of a first bank of the plurality of banks, and a second access request for the first row and a second column different from the first column of the first bank in a same entry, and transmit a first command corresponding to the first access request and a second command corresponding to the second access request to the memory device, and the memory device is configured to activate the first row of the first bank and access the first column based on the first command, and access the second column based on the second command while the first row is activated by the first command.

At least some of the above and other features of the invention are set out in the claims.

### BRIEF DESCRIPTION OF THE DRAWINGS

FIG. 1 is a block diagram for explaining a memory system according to an embodiment.
FIG. 2 is a block diagram for explaining a memory controller according to an embodiment.
FIG. 3 is a block diagram for explaining a memory device according to an embodiment.
FIG. 4 is a diagram for explaining a request queue according to an embodiment.
FIG. 5 is a diagram illustrating an entry in a request queue according to an embodiment.
FIG. 6 is a diagram for explaining an operation of a request queue.
FIG. 7 is a diagram for explaining an operation of a request queue according to an embodiment.
FIG. 8 is a diagram for explaining an operation of a request queue according to an embodiment.
FIG. 9 is a diagram for explaining an operation of a request queue according to an embodiment.
FIG. 10 is a diagram for explaining an operation of a request queue according to an embodiment.
FIG. 11 is a diagram for explaining an operation of a memory system according to an embodiment.
FIG. 12 is a flowchart for explaining a method for operating a memory controller according to an embodiment.
FIG. 13 is a perspective view for explaining a semiconductor device according to an embodiment.
FIG. 14 is a perspective view for explaining a semiconductor device according to an embodiment.
FIG. 15 is a block diagram for explaining a computing device according to an embodiment.

### DETAILED DESCRIPTION

In the following detailed description, only certain embodiments have been shown and described, simply by way of illustration. As those skilled in the art would realize, the described embodiments may be modified in various different ways, all without departing from the scope of the present disclosure.

Accordingly, the drawings and description are to be regarded as illustrative in nature and not restrictive. Like reference numerals designate like elements throughout the specification. In the flow charts described with reference to the drawings, the order of operations may be changed, and several operations may be combined, and an operation may be divided, and some operations may not be performed.

Further, expressions written in the singular forms can be comprehended as the singular forms or plural forms unless clear expressions such as "a", "an", or "single" are used. Terms including an ordinal number, such as "first" and "second", are used for describing various constituent elements, but the constituent elements are not limited by the terms. These terms are used only to discriminate one constituent element from other constituent elements.

Hereinafter, the present disclosure will be described in more detail through examples. These examples are just for illustrating the present disclosure, and the right protection scope of the present disclosure is not limited by the examples.

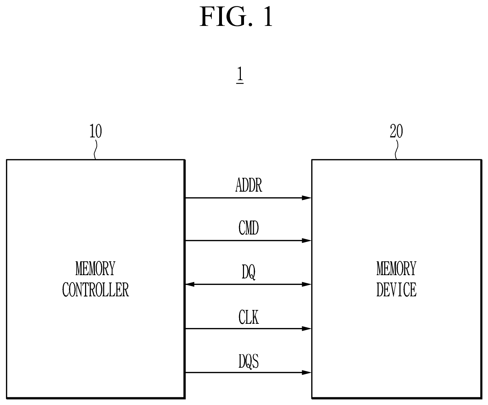

FIG. 1 is a block diagram for explaining a memory system according to an embodiment.

Referring to FIG. 1, a memory system 1 may include a memory controller 10 and a memory device 20.

The memory controller 10 may control the overall operation of the memory system 1. The memory controller 10 may control the overall data exchange between an external host and the memory device 20. For example, the memory controller 10 may control the memory device 20 to write data or read data according to a request from the host.

The memory controller 10 may control the operation of the memory device 20 by applying operation commands for controlling the memory device 20. The memory device 20 may be a DRAM, Double Data Rate 4 (DDR4), Double Data Rate 5 (DDR5), Synchronous DRAM (SDRAM), or DDR6 SDRAM having volatile memory cells, but embodiments are not limited thereto.

The memory controller 10 may transmit a clock signal CLK, a command CMD, and an address ADDR to the memory device 20. When the memory controller 10 transmits a data signal DQ to the memory device 20 or receives a data signal DQ from the memory device 20, the memory controller 10 may exchange a data strobe signal DQS with the memory device 20. The address ADDR may be accompanied by the command CMD, and in the present disclosure, the address ADDR may be referred to as an access address.

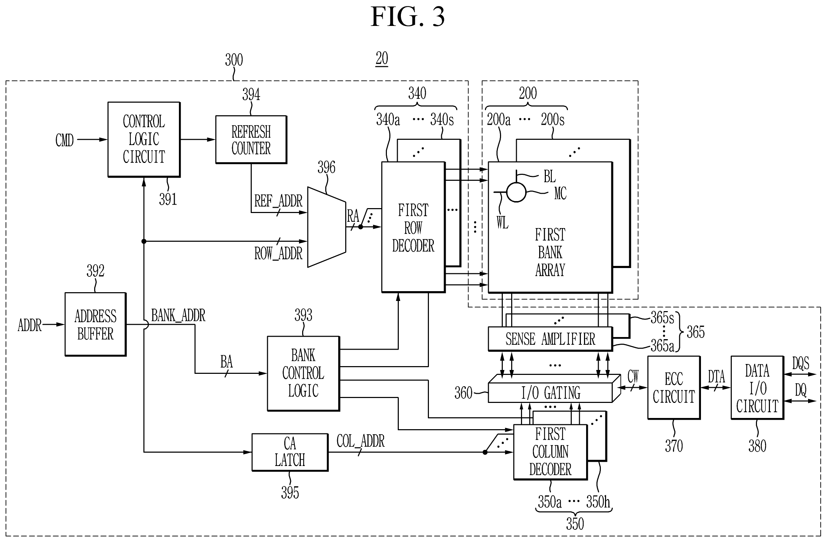

The memory device 20 may include a peripheral circuit, and a memory cell array that stores data. The peripheral circuit may control the operation of the memory cell array. The memory cell array may include a plurality of bank arrays, and each of the bank arrays may include a plurality of sub-memory arrays including a plurality of volatile memory cells. Each bank array may be divided into a plurality of row blocks by row block identification bits, which are some bits of the row address, and each of the row blocks may include the plurality of sub-memory arrays arranged in one direction. The peripheral circuit and memory cell array of the memory device 20 will be described in more detail with reference to FIG. 3.

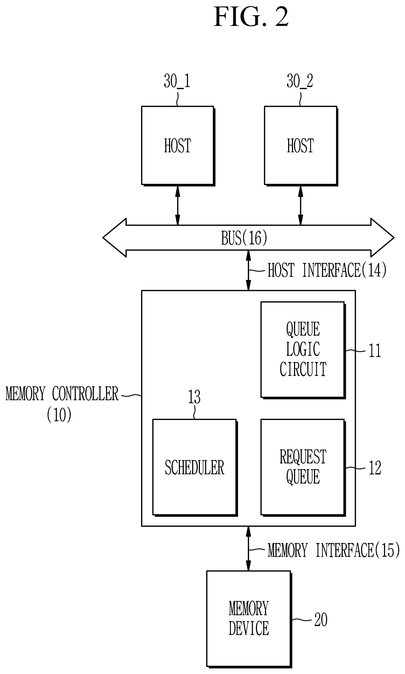

FIG. 2 is a block diagram for explaining a memory controller according to an embodiment.

Referring to FIG. 2, the memory controller 10 may include a queue logic circuit 11, a request queue 12, and a scheduler 13. The memory controller 10 may interface with a plurality of hosts 30_1, 30_2 through a host interface 14, and may interface with memory 20 through a memory interface 15. While FIG. 2 only illustrates two hosts 30_1 and 30_2 for simplicity of description, it will be understood that, in some embodiments, the memory controller 10 may interface with more than two hosts 30.

Each of the plurality of hosts 30_1, 30_2 may be implemented as a central processing unit (CPU), a graphic processing unit (GPU), etc., but embodiments are not limited thereto. Each of the plurality of hosts 30_1, 30_2 may transmit a request to the memory controller 10 through the bus 16.

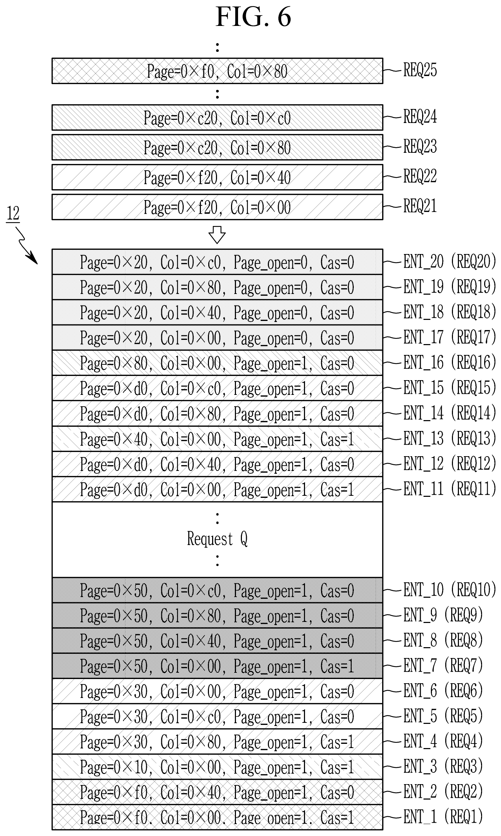

The queue logic circuit 11 may control the request queue 12 so that a request enqueued in the request queue 12 is added to a specific entry if the request satisfies a specific condition. The operation of the queue logic circuit 11 will be described in detail with reference to Fig. 6 and below.

The request queue 12 may enqueue the plurality of requests received from the plurality of hosts 30_1, 30_2 through the host interface 14. The request queue 12 may include a plurality of entries, and a plurality of enqueued requests may be stored in any one of the plurality of entries. In some embodiments, the request queue 12 may operate in a First-Ready-First-Come-First-Served (FR-FCFS) manner, although embodiments are not limited thereto.

The scheduler 13 may manage the scheduling and transmission of sequences of commands generated within the memory controller 10 in response to requests from the plurality of hosts 30_1, 30_2.

FIG. 3 is a block diagram for explaining a memory device according to an embodiment.

Referring to FIG. 3, a memory device 20 may include a memory cell array 200 and peripheral circuit 300.

The peripheral circuit 300 may include a row decoder 340, a column decoder 350, an input/output (I/O) gating circuit 360, a sense amplifier 365, an error correcting code (ECC) engine 370, a data input/output (I/O) circuit 380, a control logic circuit 391, an address buffer 392, a bank control logic 393, a refresh counter 394, a column address (CA) latch 395, and a row address multiplexer 396.

The memory cell array 200 may include a plurality of bank arrays. For example, the plurality of bank arrays may include a first bank array 200a, ..., to a sixteenth bank array 200s. The row decoder 340 may include a plurality of row decoders. For example, the row decoder 340 may include a first row decoder 340a, ..., to a sixteenth row decoder 340s, and the column decoder 350 may include a plurality of column decoders. For example, the column decoder 350 may include a first column decoder 350a, ..., to a sixteenth column decoder 350s. In an embodiment, the first to sixteenth row decoders 340a to 340s may be connected to the first to sixteenth bank arrays 200a to 200s, respectively, and the first to sixteenth column decoders 350a to 350s may be connected to the first to sixteenth bank arrays 200a to 200s, respectively. The sense amplifier 365 may include a plurality of sense amplifiers. For example, the sense amplifier 365 may include a first sense amplifier 365a, ..., to a sixteenth sense amplifier 365s, and the first to sixteenth sense amplifiers 365a to 365s may be connected to the first to sixteenth bank arrays 200a to 200s, respectively.

The first to sixteenth bank arrays 200a to 200s, the first to sixteenth sense amplifiers 365a to 365s, the first to sixteenth column decoders 350a to 350s, and the first to sixteenth row decoders 340a to 340s may operate as first to sixteenth banks, respectively. Each of the first to sixteenth bank arrays 200a to 200s may include a plurality of word lines WL, a plurality of bit lines BL, and a plurality of memory cells MC arranged at points where the word lines WL and the bit lines BL intersect. Although the memory device 20 in FIG. 3 is illustrated as including 16 banks, embodiments are not limited thereto, and the number of banks may vary depending on the embodiment.

Each of the first to sixteenth bank arrays 200a to 200s may include a plurality of memory cells MC, which are a plurality of volatile memory cells that store data. Each of the first to sixteenth bank arrays 200a to 200s may include a plurality of sub-memory arrays, and the plurality of sub-memory arrays may be divided into a plurality of row blocks by row block identification bits, which are some bits of a row address. The row block may include a plurality of sub-memory arrays arranged in one direction.

The control logic circuit 391 may control the operation of the memory device 20. For example, the control logic circuit 391 may generate control signals to cause the memory device 20 to perform a write operation or a read operation. Although not shown, the control logic circuit 391 may include a command decoder for decoding a received command CMD and a mode register for setting the operating mode of the memory device 20 (see also FIG. 1).

The command decoder may decode chip select signals and command/address signals, etc., to generate control signals corresponding to the command CMD. The memory controller 10 in Fig. 1 may change the values stored in the mode register by issuing a code and set the operating conditions, operating mode, etc. of the memory device 20.

The address buffer 392 may receive an address ADDR including a bank address BANK_ADDR, a row address ROW_ADDR, and a column address COL_ADDR from the memory controller 10 in FIG. 1. The address buffer 392 may provide the received bank address BANK_ADDR to the bank control logic 393, the received row address ROW_ADDR to the row address multiplexer 396, and the received column address COL_ADDR to the column address (CA) latch 395.

The bank control logic 393 may generate a bank control signal in response to the bank address BANK_ADDR. In response to the bank control signal, a row decoder corresponding to the bank address BANK_ADDR among the first to sixteenth row decoders 340a to 340s may be activated, and a column decoder corresponding to the bank address BANK_ADDR among the first to sixteenth column decoders 350a to 350s may be activated.

The row address multiplexer 396 may receive the row address ROW_ADDR from the address buffer 392 and a refresh row address REF_ADDR from the refresh counter 394. The row address multiplexer 396 may selectively output the row address ROW_ADDR or the refresh row address REF_ADDR as the row address RA. The row address RA output from the row address multiplexer 396 may be applied to each of the first to sixteenth row decoders 340a to 340s.

Among the first to sixteenth row decoders 340a to 340s, a row decoder activated by the bank control logic 393 may decode the row address RA output from the row address multiplexer 396 and activate a word line corresponding to the row address. Although not shown, each of the first to sixteenth row decoders 340a to 340s may include a plurality of sub-wordline driving drivers. For example, a sub-wordline driving driver within the activated row decoder may apply a wordline driving voltage to a wordline corresponding to the row address.

The column address (CA) latch 395 may receive the column address COL_ADDR from the address buffer 392 and temporarily store the received column address COL_ADDR. The column address latch 395 may incrementally increase the received column address COL_ADDR in burst mode. The column address latch 395 may apply a temporarily stored or gradually increased column address COL_ADDR to the first to sixteenth column decoders 350a to 350s, respectively.

Among the first to sixteenth column decoders 350a to 350s, a column decoder activated by the bank control logic 393 may activate a sense amplifier corresponding to the bank address BANK_ADDR and the column address COL_ADDR through a corresponding input/output (I/O) gating circuit 360.

The input/output (I/O) gating circuit 360 may include circuit for gating input/output data, input data mask logic, a read data latch for storing codewords output from the first to sixteenth bank arrays 200a to 200s, and write drivers for writing data to the first to sixteenth bank arrays 200a to 200s.

The codeword CW read from one of the first to sixteenth bank arrays 200a to 200s may be detected by a sense amplifier corresponding to the one bank array and stored in the read data latch. The codeword CW stored in the read data latch may undergo ECC decoding by the ECC engine 370 and be provided as data DTA to the data input/output circuit 380. The data input/output circuit 380 may convert the data DTA into a data signal DQ based on the data DTA and provide the data signal DQ to the memory controller 10 in FIG. 1 together with a strobe signal DQS.

The data signal DQ to be written to one of the first to sixteenth bank arrays 200a to 200s may be received by a data input/output circuit 380 together with the strobe signal DQS. The data input/output circuit 380 may convert the data signal DQ into data DTA and provide the data DTA to the ECC engine 370. The ECC engine 370 may generate parity data or parity bit based on the data DTA and provide a codeword CW including the data DTA and the parity data to the input/output gating circuit 360. The input/output gating circuit 360 may write a codeword CW to a target page of one bank array through the write drivers.

The data input/output (I/O) circuit 380 may convert the data signal DQ into data DTA in a write operation and provide the data DATA to an ECC engine 370, and may convert data DTA provided from the ECC engine 370 into the data signal DQ in a read operation and provide the data signal DQ and the strobe signal DQS to the memory controller 10 in FIG. 1.

The error correcting code (ECC) engine 370 may perform ECC encoding for data DTA and ECC decoding for codeword CW based on the control signal provided from a control logic circuit 391.

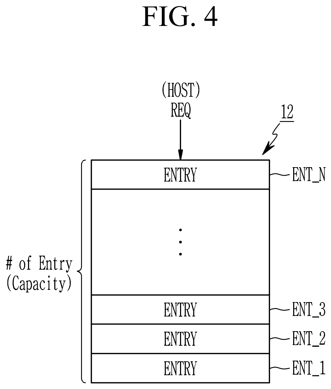

FIG. 4 is a diagram for explaining a request queue according to an embodiment.

Referring to FIG. 4, the request queue 12 may include a plurality of entries ENT_1 to ENT_N. Specifically, the request queue 12 may include a first entry ENT_1 to an N-th entry ENT_N. The request queue 12 may enqueue a request REQ received from a host or, host 30_1, 30_2 of FIG. 2 and store the request REQ in one of the plurality of entries ENT_1 to ENT_N.

The request queue 12 may be implemented in the FR-FCFS manner as described above, but embodiments are not limited thereto. When the request queue 12 is implemented in the FR-FCFS manner, the request REQ stored in the first entry ENT_1 among the enqueued requests REQ may be dequeued before the request REQ stored in the second entry ENT_2, and the request REQ stored in the second entry ENT_2 may be dequeued before the request REQ stored in the third entry ENT_3.

The maximum number of entries that the request queue 12 can store may be referred to as the capacity of the request queue 12. In the example of Fig. 4, the request queue 12 may store a total of N (N is a natural number entries).

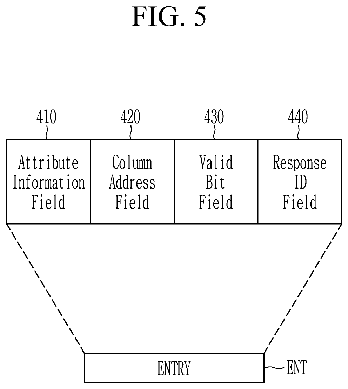

FIG. 5 is a diagram illustrating an entry in a request queue according to an embodiment.

Referring to FIG. 5, the entry ENT may include an attribute information field 410, a column address field 420, a valid bit field 430, and a response ID field 440. Here, entry ENT may refer to any one of the plurality of entries ENT_1 to ENT_N illustrated in FIG. 4.

The attribute information field 410 may store attribute information for the request REQ in FIG. 4 enqueued in the request queue 12 in FIG. 4. Attribute information for the REQ may include addresses for the target bank and target row of the REQ.

The column address field 420 may store a column address for the request REQ enqueued in the request queue 12. The column address for the REQ may include an address for a target column of the REQ.

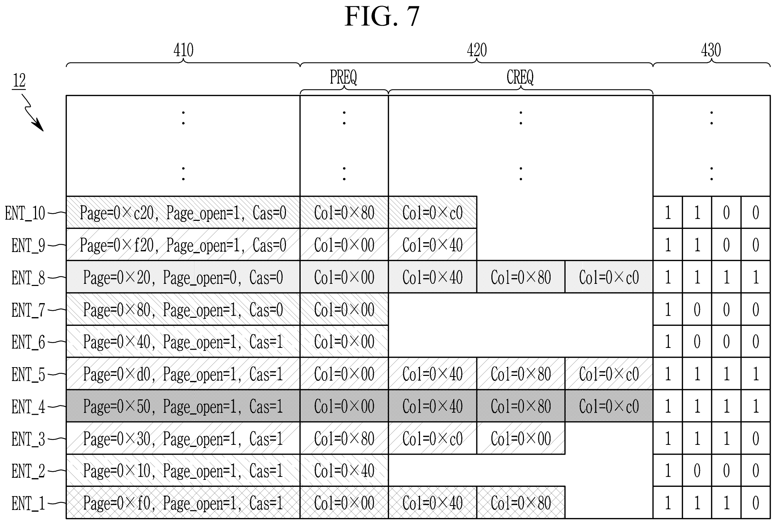

As described below in Figure 7, each entry ENT may store parent requests and child requests. In an embodiment, the column address field 420 may store a column address for the parent request and a column address for the child request.

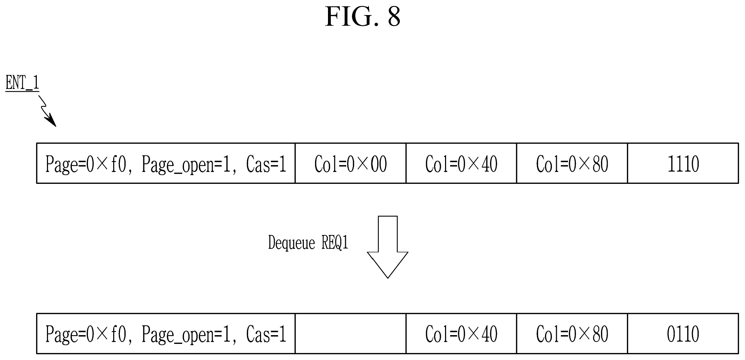

The valid bit field 430 may store a bit indicating the status of a pending request REQ in the corresponding entry ENT. For example, the bit values stored in the valid bit field 430 may be different in each of a state in which a request REQ is enqueued into the request queue 12 and stored in the corresponding entry ENT, and a state in which the request REQ is dequeued from the request queue 12 and deallocated from the corresponding entry ENT. Specific details are described later with reference to Fig. 8 and below.

The response ID field 440 may include information for identifying the host of the plurality of hosts 30_1, 30_2 of FIG.2 that issued a specific request REQ. Based on the identification information stored in the response ID field 440, the memory controller 10 in FIG. 1 may transmit a response to the request REQ to the one of the plurality of hosts 30_1, 30_2 that issued the request REQ.

FIG. 6 is a diagram for explaining an operation of a request queue.

Referring to FIG. 6, the request queue 12 may include a plurality of entries ENT_1 to ENT_20. Each of the plurality of entries ENT_1 to ENT_20 may store a specific request. For example, the first entry ENT_1 may store the 1-st request REQ1, the eleventh entry ENT_11 may store the eleventh request REQ11, and so on.

In the example of Fig. 6, the request queue 12 may be in a state in which requests are stored in all of the plurality of entries ENT_1 to ENT_20. Accordingly, the 21-st request REQ21 to the 25-th request REQ25 may not be enqueued into the request queue 12 and may be in a pending state.

Each of the enqueued first to twentieth requests REQ1 to REQ20 may include attribute information as described above with respect to FIG. 5. The attribute information may include the target bank address and target row address for each request REQ. In Fig. 6, only the target row address, i.e., page address, is shown for convenience of explanation, but in the following description, requests with the same target row address are assumed to have the same target bank address, and the 1-st request REQ will be explained as an example. For convenience of explanation, it is assumed that the request REQ is a read request to a memory device 20 in Fig. 1.

The first entry ENT_1 may store the 1-st request REQ1, and the first entry ENT_1 may include attribute information indicating that the 1-st request REQ1 targets a row having a page address of '0xf0' in a specific bank among the plurality of banks. The first entry ENT_1 may include a column address indicating that the 1-st request REQ1 targets a column having a column address of '0x00' in page '0xf0' of the particular bank.

'Page_open' may indicate whether the activation operation for the page, i.e. row targeted by the 1-st request REQ1, is ready. When 'Page_open=1', it may indicate that the activation operation for the target page is ready, and when 'Page_open=0', it may indicate that the activation operation for the target page is not ready.

'Cas' may indicate whether the access operation for the column targeted by the 1-st request REQ1 is ready. When 'Cas=1', it may indicate that the access operation for the target column is ready, and when 'Cas=0', it may indicate that the access operation for the target column is not ready.

Since the request queue 12 illustrated in Fig. 6 stores only one request REQ in one entry ENT, there may be a limitation due to the maximum capacity of the request queue 12. The request queue 12 of the memory controller 10 of FIG. 1 according to an embodiment may achieve substantially increased capacity by storing requests having the same attribute information in the same entry, as described in more detail below.

FIG. 7 is a diagram for explaining an operation of a request queue according to an embodiment. Below, the operation of adding and storing a request enqueued in the request queue 12 in Fig. 2 to an entry will be described from the perspective of the control of the queue logic circuit 11 in Fig. 2.

Referring to FIG. 7, the request queue 12 may include first to 10-th entries ENT_1 to ENT_10 storing requests REQ. Each of the first to 10-th entries ENT_1 to ENT_10 may store a request REQ in a data structure including an attribute information field 410, a column address field 420, and a valid bit field 430, as described with reference to FIG. 5.

When a specific request REQ is enqueued into a request queue 12, if another request REQ having the same attribute information as the attribute information of the specific request REQ is already stored in a specific entry, another request REQ may be referred to as a parent request PREQ and the specific request REQ may be referred to as a child request CREQ.

Specifically, referring to FIG. 6 together with FIG. 7, taking the 1-st request REQ1, the 2-nd request REQ2, and the 25-th request REQ25 as examples, the first entry ENT_1 may store the 1-st request REQ1. Subsequently, when the 2-nd request REQ2 is enqueued into the request queue 12, the 1-st request REQ1 and the 2-nd request REQ2 may include the same attribute information i.e., 'Page=0xf0'. Accordingly, the 1-st request REQ may be stored as a parent request PREQ in the first entry ENT_1, and the 2-nd request REQ2 may be added and stored as a child request CREQ in the first entry ENT _1. The 2-nd request REQ2 may be added and stored to be dequeued subsequent to the 1-st request REQ1.

If a 25-th request REQ25 is subsequently enqueued into the request queue 12, the attribute information of the 25-th request REQ25 may be identical to the attribute information of the 1-st request REQ1 and the 2-nd request REQ2 stored in the first entry ENT_1. Accordingly, the 25-th request REQ25 may be added and stored as a child request CREQ to the first entry ENT_1. The 25-th request REQ25 may be added and stored to be dequeued subsequent to request 2 REQ2.

Referring to FIG. 6, taking the 3-rd request REQ3 as another example, if the 3-rd request REQ3 is enqueued into the request queue 12 subsequent to the 2-nd request REQ2, it may be determined whether there is a request among the requests enqueued prior to the 3-rd request REQ3 that has the same attribute information as the attribute information of the 3-rd request REQ3, i.e., whether there is a parent request PREQ for the 3-rd request REQ3. Since the 1-st request REQ1 and the 2-nd request REQ2 enqueued prior to the 3-rd request REQ include the same attribute information of 'Page=0xf0', while the 3-rd request REQ3 includes different attribute information of 'Page=0x10', it may be determined that there is no request having the same attribute information as the attribute information of the 3-rd request REQ3, i.e., there is no parent request PREQ for the 3-rd request REQ3. Based on the determination that a parent request PREQ for the 3-rd request REQ3 does not exist in the request queue 12, the 3-rd request REQ3 may be stored as a parent request PREQ in the second entry ENT_2 subsequent to the first entry ENT_1.

The 25-th request REQ-25 is enqueued into the request queue 12 following the 3-rd request REQ3, but since the 25-th request REQ-25 is added and stored in the first entry ENT_1 where the parent request PREQ, i.e., the 1-st request REQ1 is stored, the 25-th request REQ25 may be dequeued ahead of the 3-rd request REQ3.

Although not specifically illustrated in FIGS. 6 and 7, for example, when a 26-th request REQ26 including attribute information of 'Page=0x50' is enqueued into the request queue 12 following a 25-th request REQ25, it may be determined whether a request, i.e., a parent request PREQ including the same attribute information, i.e., 'Page=0x50' as the 26-th request REQ26 exists in the request queue 12.

The 7-th request REQ7 including the same attribute information may be stored in the 4-th entry ENT_4 as a parent request PREQ, and the 8-th to 10-th requests REQ8 to REQ10 may be stored in the 4-th entry ENT_4 as child requests CREQ. In an embodiment, it may be additionally determined whether the maximum number of requests is stored in the 4-th entry ENT_4. In some embodiments, the maximum number of requests may be four. That is, each entry ENT may store one parent request PREQ and up to three child requests CREQ. However, embodiments are not limited to a maximum number of four and, in some embodiments, the maximum number may be more or less than four.

Since the 4-th entry ENT_4 stores the 7-th request REQ7 as a parent request PREQ and the 8-th to 10-th requests REQ8 to REQ10 as child requests CREQ, it may be determined that the 4-th entry ENT_4 stores the maximum number of requests. Based on this determination, the 26-th request REQ26 may not be added to the 4-th entry ENT_4, but may be stored in a new 11-th entry ENT_11 subsequent to the 10-th entry ENT_10.

The valid bit field 430 may store bits indicating the status of a pending request REQ in an entry ENT. Taking the first entry ENT_1 in FIG. 6 and FIG. 7 as an example, since the first entry ENT_1 stores the 1-st request REQ1 as a parent request PREQ and stores the 2-nd request REQ2 and the 25-th request REQ25 as child requests CREQ, the bit value stored in the valid bit field 430 of the first entry ENT_1 may be '1110'. As another example, taking the second entry ENT_2 as an example, since the second entry ENT_2 stores the 3-rd request REQ3 as a parent request PREQ and does not store the child request CREQ, the bit value stored in the valid bit field 430 of the second entry ENT_2 may be '1000'.

The bit values stored in the valid bit field for a particular entry ENT may change when a request is dequeued from that entry ENT. Specific details are explained with reference to Fig. 8 and below.

FIGS. 8 to 10 are diagrams for explaining an operation of a request queue according to an embodiment. Specifically, FIG. 8 is a diagram for explaining a change in a bit value stored in a valid bit field 430 according to a dequeue of a request REQ in the request queue 12 illustrated in FIG. 7. Below, for convenience of explanation, the first entry ENT_1 illustrated in FIG. 7 is used as an example.

Referring to FIGS. 7 and 8, the first entry ENT_1 may store the 1-st request REQ1 as a parent request PREQ and may store the 2-nd request REQ2 and the 25-th request REQ25 as child requests CREQ, as described above. The requests REQ may be dequeued in the order of the 1-st request REQ1, the 2-nd request REQ2, and the 25-th request REQ25 in the first entry ENT_1.

In a state where the 1-st request REQ1 is stored as a parent request PREQ in the first entry ENT_1, and the 2-nd request REQ2 and the 25-th request REQ25 are stored as child requests CREQ, the bit value stored in the valid bit field 430 may have '1110'.

Afterwards, when the 1-st request REQ1 is dequeued, the bit value stored in the valid bit field 430 may be changed to '0110'.

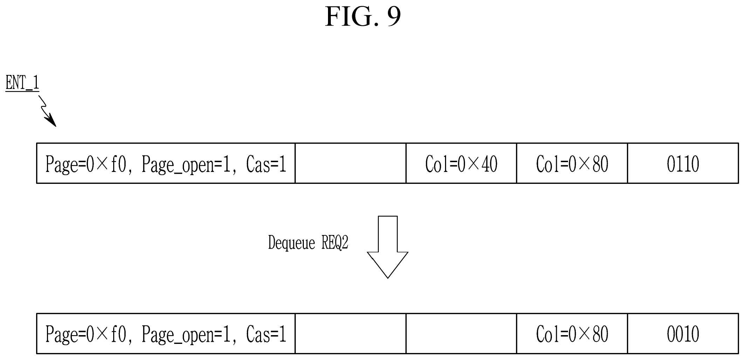

Referring to FIGS. 7 and 9, when a 2-nd request REQ2 is dequeued following a 1-st request REQ1, the bit value stored in the valid bit field 430 may be changed to '0010'.

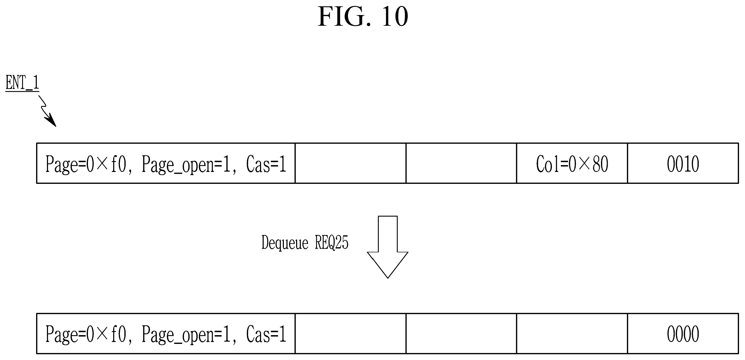

Referring to FIGS. 7 and 10, when a 25-th request REQ25 is dequeued following a 2-nd request REQ2, the bit value stored in the valid bit field 430 may be changed to '0000'.

In response to the bit value stored in the valid bit field 430 of the first entry ENT_1 being changed to '0000', all requests stored in the first entry ENT_1 may be determined to be dequeued, and accordingly, requests stored in the second entry ENT_2 subsequent to the first entry ENT_1 may be sequentially dequeued.

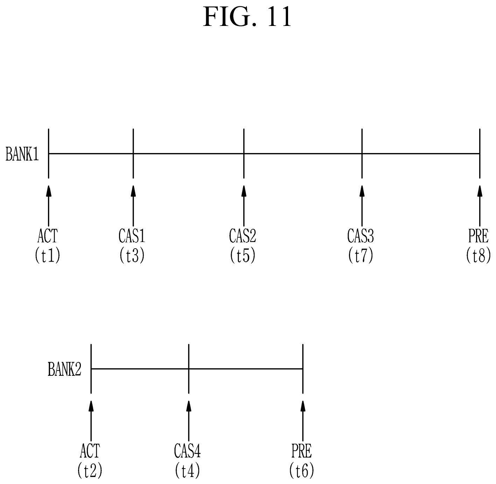

FIG. 11 is a diagram for explaining an operation of a memory system according to an embodiment. In the following description, for convenience of explanation, it is assumed and explained that the 1-st request REQ1, the 2-nd request REQ2, and the 25-th request REQ25 stored in the first entry ENT_1 illustrated in FIG. 7 are access requests for the page, i.e., row address, of '0xf0' of the first bank BANK1, and the 3-rd request REQ3 stored in the second entry ENT_2 is an access request for the page address of '0x10' of the second bank BANK2.

Referring to FIGS. 7 and 11, the memory controller 10 of FIG. 1 may transmit a command corresponding to a 1-st request REQ1 stored in a first entry ENT_1, a command corresponding to a 2-nd request REQ2, and a command corresponding to a 3-rd request REQ3 to the memory device 20 of FIG. 1.

The command corresponding to the 1-st request REQ1 may include an active command ACT for activating a target bank address and a target row address included in the attribute information of the 1-st request REQ1. That is, the target row, i.e., the row with the address of '0xf0' of the first bank BANK1, may be activated at a first time point t1 based on the active command ACT corresponding to the 1-st request REQ1.

The command corresponding to the 1-st request REQ1 may include a first column-address strobe command CAS1 for accessing a first column address included in the 1-st request REQ1. That is, the first column-address strobe command CAS1 may be an access command for the column address of '0x00' of the first bank BANK1. That is, the target column, i.e., the column with the address of '0x00' of the first bank BANK1, may be accessed at a 3-rd time point t3 based on the first column-address strobe command CAS1 corresponding to the 1-st request REQ1.

Since the 1-st request REQ1, the 2-nd request REQ2, and the 25-th request REQ25 included in the first entry ENT_1 have the same target bank address and target page address, a precharge operation may not be performed after data access for the 1-st request REQ1. That is, while the target row is opened or activated by the active command ACT included in the command corresponding to the 1-st request REQ1, an operation according to the command corresponding to each of the 2-nd request REQ2 and the 25-th request REQ25 may be performed.

Specifically, the command corresponding to the 2-nd request REQ2 may include a second column-address strobe command CAS2 for accessing a second column address included in the 2-nd request REQ2. That is, the second column-address strobe command CAS2 may be an access command for the column address of '0x40' of the first bank BANK1. That is, the target column i.e., the column with the address of '0x40' of the first bank BANK1, may be accessed at a 5-th time point t5 based on the second column-address strobe command CAS2 corresponding to the 2-nd request REQ2.

The command corresponding to the 25-th request REQ25 may include a third column-address strobe command CAS3 for accessing a third column address included in the 25-th request REQ25. That is, the third column-address strobe command CAS3 may be an access command for the column address of '0x80' of the first bank BANK1. That is, the target column, i.e., the column with the address of '0x80' of the first bank BANK1, may be accessed at a 7-th time point t7 based on the third column-address strobe command CAS3 corresponding to the 25-th request REQ25. Thereafter, at an 8-th time point t8, a precharge operation may be performed according to the precharge command PRE.

The memory controller 10 may transmit a command corresponding to the 3-rd request REQ3 stored in the second entry ENT_2 to the memory device 20.

The command corresponding to the 3-rd request REQ3 may include an active command ACT to activate a target bank address and a target row address included in the attribute information of the 3-rd request REQ3. That is, the target row, i.e., the row with the address of '0x10' of the second bank BANK2, may be activated at a second time point t2 based on the active command ACT corresponding to the 3-rd request REQ3.

The command corresponding to the 3-rd request REQ3 may include a 4-th column-address strobe command CAS4 for accessing the 4-th column address included in the 3-rd request REQ3. That is, the 4-th column-address strobe command CAS4 may be an access command for the column address of '0x40' of the second bank BANK2. That is, the target column i.e., the column with the address of 'Ox40' of the second bank BANK2, may be accessed at a 4-th time point t4 based on the 4-th column-address strobe command CAS4 corresponding to the 3-rd request REQ3.

The second entry ENT_2, unlike the first entry ENT_1, may store only one request. Accordingly, a precharge operation according to the precharge command PRE may be performed at a 6-th time point t6 without accessing an additional target column.

As described above, the memory controller 10 according to various embodiments may prevent duplicate activation operations and precharge operations by storing requests REQ having the same attribute information, i.e., the same target bank address and target row address, in the same entry ENT within the request queue 12 and sequentially dequeuing them. As a result, the throughput of the memory device 20 may be improved.

The capacity of the request queue 12 may be improved by additionally storing requests REQ with the same attribute information in the same entry ENT. Since more requests REQ may be enqueued into the request queue 12, the probability of page hit increases, maximizing the parallel work of the bank.

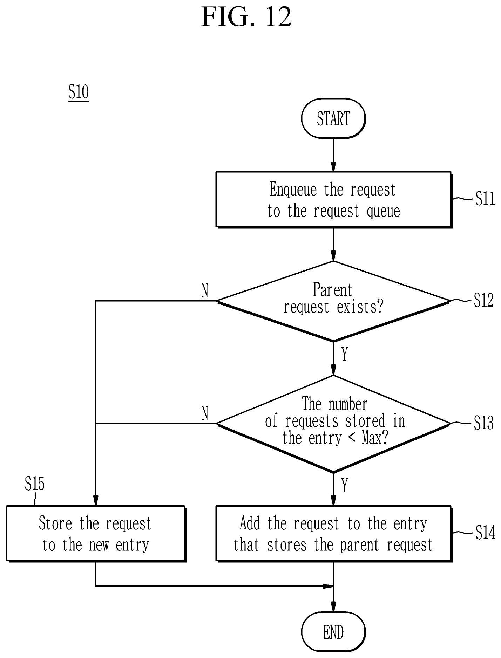

FIG. 12 is a flowchart for explaining a method for operating a memory controller according to an embodiment.

Referring to FIG. 12, the operation method S10 of the memory controller may include operations S11 to S15. The operation method S10 may include an operation of enqueuing a request into a request queue S11. Specifically, referring to FIG. 2, the host interface 14 of the memory controller 10 may receive a plurality of requests REQ from a plurality of hosts 30_1, 30_2 and enqueue the received requests REQ into the request queue 12.

The method of operating the memory controller S10 may include an operation of determining whether a parent request exists S12. Specifically, referring to FIG. 2, the queue logic circuit 11 of the memory controller 10 may determine whether a request, i.e., a parent request including the same attribute information as the attribute information included in a request REQ enqueued to the request queue 12, already exists in the request queue 12.

If it is determined that a parent request exists (operation S12, Y), the operation method of the memory controller S10 may proceed to an operation of determining whether the number of requests stored in the entry is less than a maximum value Max (operation S13). Specifically, referring to FIG. 2, the queue logic circuit 11 of the memory controller 10 may determine that a request, i.e., a parent request including the same attribute information as the attribute information included in a request REQ enqueued to the request queue 12, is stored in a specific entry, and may determine whether the number of requests stored in the specific entry is less than a maximum value Max.

For example, referring to FIG. 7 together with FIG. 12, if it is assumed that a 26-th request REQ26 including attribute information whose target page address is '0xf0' is enqueued into the request queue 12, the queue logic circuit 11 may confirm that a request including attribute information identical to the attribute information of the 26-th request REQ26 is stored in the first entry ENT_1. The queue logic circuit 11 may then determine whether the number of requests stored in the first entry ENT_1 is less than the maximum value. Here, the maximum value may be 4 as described above, but embodiments are not limited thereto.

If it is determined that the number of requests stored in the entry storing the parent request is less than the maximum value (operation S13, Y), the operation method of the memory controller S10 may proceed to an operation of adding the enqueued entry to the entry that store the parent request S14. Specifically, referring to FIG. 2, the queue logic circuit 11 of the memory controller 10 may determine that the number of requests stored in the entry storing the parent request is less than the maximum value, and based on this determination, may add the enqueued request to the entry storing the parent request.

For example, referring to FIG. 7 together with FIG. 12, the queue logic circuit 11 may determine that the number of requests stored in the first entry ENT_1 is 3, which is less than the maximum value of 4. Accordingly, the queue logic circuit 11 may add the 26-th request REQ26 to the first entry ENT_1 to be dequeued subsequent to the 25-th request REQ25.

If it is determined that the parent request does not exist (operation S12, N), the operation method of the memory controller S10 may proceed an operation of storing the enqueued entry to a new entry (operation S15). Specifically, referring to FIG. 2, the queue logic circuit 11 of the memory controller 10 may determine that a request, i.e., a parent request including the same attribute information as the attribute information included in a request REQ enqueued into the request queue 12, does not exist in the request queue 12, and accordingly, may store the enqueued request REQ in a new entry.

For example, referring to FIG. 7 together with FIG. 12, if it is assumed that the 27-th request REQ27 including attribute information having a target page address of '0x70' is enqueued into the request queue 12, the queue logic circuit 11 may determine that a request including attribute information identical to the attribute information of the 27-th request REQ27 does not exist in the request queue 12. The queue logic circuit 11 may thus store the 27-th request REQ27 in a new 11-th entry ENT_11 subsequent to the 10-th entry ENT_10.

If it is determined that the number of requests stored in the entry storing the parent request is not less than the maximum value (operation S13, N), the operation method of the memory controller S10 may proceed to the operation of storing the enqueued entry to a new entry S15. Specifically, referring to FIG. 2, the queue logic circuit 11 of the memory controller 10 may determine that the number of requests stored in the entry storing the parent request is not less than the maximum value, and based on this determination, may store the enqueued request in a new entry, not the entry storing the parent request.

For example, referring to FIG. 7 together with FIG. 12, if it is assumed that a 28-th request REQ28 including attribute information whose target page address is '0x20' is enqueued into a request queue 12, the queue logic circuit 11 may confirm that a request including attribute information identical to the attribute information of the 28-th request REQ28 is stored in the 8-th entry ENT_8, and then the queue logic circuit 11 may determine that the number of requests stored in the 8-th entry ENT_8 is not less than the maximum value. The queue logic circuit 11 may accordingly store the 28-th request REQ28 in a new 11-th entry ENT_11 following the 10-th entry ENT_10.

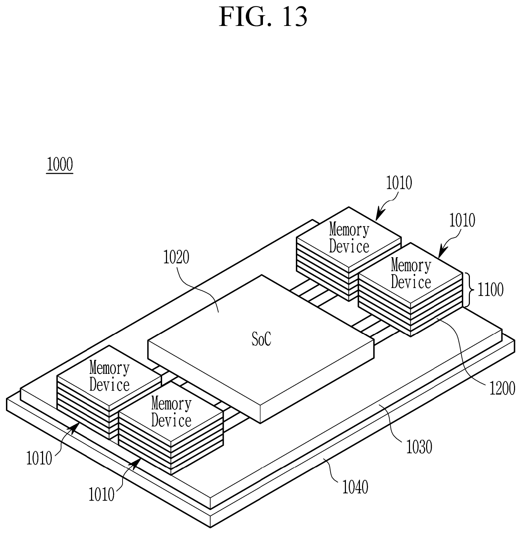

FIG. 13 is a perspective view for explaining a semiconductor device according to an embodiment.

Referring to FIG. 13, a semiconductor device 1000 may be a semiconductor package, which may be a memory module including at least one memory device 1010 and a system-on-chip (SoC)1020 mounted on a package substrate 1040, such as a printed circuit board.

In some embodiments, the system-on-chip (SoC) 1020 may include the memory controller 10 as described with reference to FIGS. 1 through 12.

Specifically, the system-on-chip (SoC) 1020 may prevent duplicate activation operations and precharge operations by storing requests having the same attribute information, i.e., the same target bank address and target row address, in the same entry within the request queue and sequentially dequeuing them. As a result, the throughput of the semiconductor device 1000 may be improved.

The capacity of the request queue may be improved by additionally storing requests with the same attribute information in the same entry. Since more requests may be enqueued into the request queue, the probability of a page hit increases, maximizing the parallel work of the bank.

In some embodiments, an interposer 1030 may be further provided on the package substrate 1040. In some embodiments, the memory device 1010 may be formed as a chip-on-chip CoC. A memory device 1010 may include a memory die 1100 including at least one memory die stacked on a logic die 1200. The memory die 1100 and the logic die 1200 may be connected to each other by through-silicon vias.

In some embodiments, the memory device 1010 may be a high bandwidth memory (HBM) of 500 GB/sec to 1 TB/sec, or more.

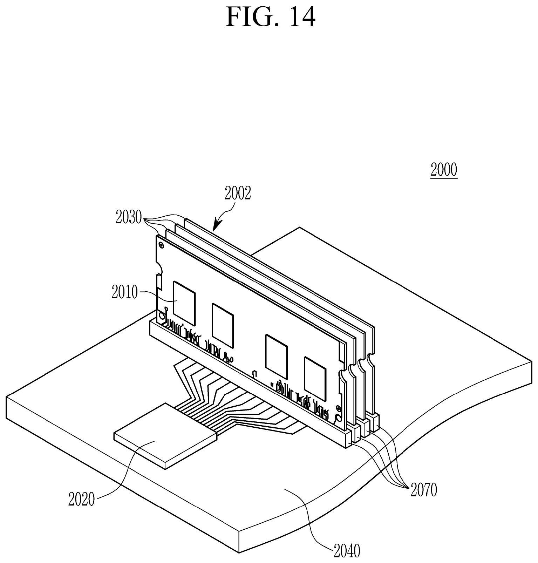

FIG. 14 is a perspective view for explaining a semiconductor device according to an embodiment.

Referring to FIG. 14, a semiconductor device 2000 may be a DIMM Dual In-line Memory Module system in which semiconductor chips are mounted on both sides of a printed circuit board, and may include a memory module 2002 including at least one PCB 2030 and a memory controller 2020. A memory controller 2020 is mounted on the main board 2040, and the PCB 2030 may be electrically connected to the main board 2040 through a plurality of connection sockets.

The memory device 2010 may be formed chip-on-chip and mounted on both sides of the PCB 2030. The memory controller 2020 and the memory device 2010 may be electrically connected via a bus within the PCB 2030 and the main board 2040. In some embodiments, the memory device 2010 may include a stacked structure of memory dies and logic dies.

In some embodiments, the memory controller 2020 may be implemented as the memory controller 10 as described with reference to FIGS. 1 to 12.

Specifically, the memory controller 2020 may prevent duplicate activation operations and precharge operations by storing requests having the same attribute information, i.e., the same target bank address and target row address, in the same entry within the request queue and sequentially dequeuing the requests. As a result, the throughput of the semiconductor device 2000 may be improved.

The capacity of the request queue may be improved by additionally storing requests with the same attribute information in the same entry. Since more requests may be enqueued into the request queue, the probability of a page hit increases, maximizing the parallel work of the bank.

In some embodiments, the memory device 2010 may be a high bandwidth memory (HBM) of 500 GB/sec to 1 TB/sec, or more.

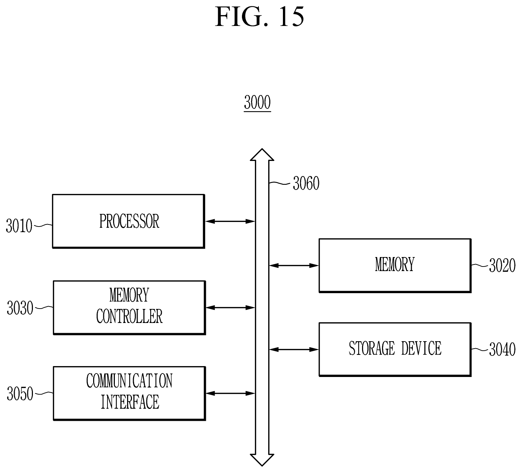

FIG. 15 is a block diagram for explaining a computing device according to an embodiment.

Referring to FIG. 15, a computing device 3000 may include a processor 3010, a memory 3020, a memory controller 3030, a storage device 3040, a communication interface 3050, and a bus 3060. The computing device 3000 may further include other general-purpose components.

The processor 3010 may control the overall operation of each component of the computing device 3000. The processor 3010 may be implemented as at least one of various processing units such as a CPU, an AP, and/or a GPU.

The memory 3020 may store various data and commands. In some embodiments, the memory 3020 may be DRAM, although embodiments are not limited thereto.

The memory controller 3030 may control the transfer of data or commands to and from the memory 3020. In some embodiments, the memory controller 3030 may be provided as a separate chip from the processor 3010. In some embodiments, the memory controller 3030 may be provided as an internal component of the processor 3010.

In some embodiments, the memory controller 3030 may be implemented as the memory controller 10 as described with reference to FIGS. 1 to 12.

Specifically, the memory controller 3030 may prevent duplicate activation operations and precharge operations by storing requests having the same attribute information, i.e., the same target bank address and target row address, in the same entry within the request queue and sequentially dequeuing them. As a result, the throughput of the computing device 3000 may be improved.

The capacity of the request queue may be improved by additionally storing requests with the same attribute information in the same entry. Since more requests may be enqueued into the request queue, the probability of a page hit increases, maximizing the parallel work of the bank.

The storage device 3040 may non-temporarily store programs and data. In some embodiments, the storage device 3040 may be implemented as non-volatile memory. The communication interface 3050 may support wired and wireless Internet communication of the computing device 3000. The communication interface 3050 may support various communication methods other than Internet communication. The bus 3060 may provide communication between components of the computing device 3000. The bus 3060 may include at least one type of bus depending on the communication protocol between the components.

In some embodiments, each component or a combination of two or more components described with reference to FIGS. 1 to 15 may be implemented as a digital circuit, a programmable or non-programmable logic device or array, an application specific integrated circuit ASIC, or the like.

Although various embodiments have been described in detail above with respect to the drawings, the scope of the present disclosure is not limited thereto, and various modifications and improvements made by those skilled in the art using the basic concept of the following claims also fall within the scope of the present disclosure.

The invention may also be defined by any of the following numbered clauses.
1. A memory controller comprising:
   a request queue configured to enqueue a first request among a plurality of requests received from a host into one of a plurality of entries; and
   a queue logic circuit configured to control the request queue to add the first request to the first entry as a child request, based on determining that a parent request having substantially the same attribute information as an attribute information of the first request exists in the first entry among the plurality of entries.
2. The memory controller of clause 1, wherein:
   the queue logic circuit is configured to control the request queue to store a second request in a second entry subsequent to the first entry as a parent request, based on determining that a parent request having substantially the same attribute information as an attribute information of the second request among the plurality of requests received from the host does not exist in the request queue.
3. The memory controller of clause 2, wherein:
   the queue logic circuit is configured to control the request queue to add a third request to the first entry as a child request, based on determining that a parent request having substantially the same attribute information as an attribute information of the third request among the plurality of requests received from the host exists in the first entry.
4. The memory controller of clause 3, wherein:
   the request queue is configured to dequeue the first request ahead of the third request.
5. The memory controller of clause 3, wherein:
   the request queue is configured to dequeue the third request ahead of the second request.
6. The memory controller of clause 3, wherein:
   the queue logic circuit is configured to control the request queue to store a fourth request in a third entry subsequent to the second entry as a parent request, based on determining that a parent request having substantially the same attribute information as an attribute information of the fourth request among the plurality of requests received from the host exists in the first entry and determining that a maximum number of requests is stored in the first entry.
7. The memory controller of clause 6, wherein:
   the maximum number of requests is 4.
8. The memory controller of clause 1, wherein:
   each of the plurality of entries includes an attribute information field, a column address field of the parent request, a column address field of the child request, a valid bit field, and a response ID field.
9. The memory controller of clause 8, wherein:
   a valid bit value stored in the valid bit field of the first entry is changed in response to the parent request of the first entry being dequeued.
10. The memory controller of clause 9, wherein:
   the valid bit value stored in the valid bit field of the first entry is changed in response to the first request being dequeued subsequent to the parent request of the first entry.
11. The memory controller of clause 1, wherein:
   the attribute information of the first request includes at least a target bank address and a target row address of the first request.
12. The memory controller of clause 1, wherein:
   the request is a read request for a memory device connected to the memory controller.
13. The memory controller of clause 1, wherein:
   the request queue is configured to operate in the First-Ready-First-Come-First-Served manner.
14. The memory controller of clause 1, wherein:
   the parent request and the first request stored in the first entry are requests to access different columns in the same bank and the same row of a memory device connected to the memory controller.
15. The memory controller of clause 14, wherein:
   the memory device is a dynamic random access memory.
16. A method for operating a memory controller, comprising:
   a step of enqueuing a first request and a second request among a plurality of requests received from a host into a request queue including a plurality of entries;
   a step of determining whether a parent request having substantially the same attribute information as an attribute information of the first request exists in the request queue;
   a step of adding the first request to a first entry as a child request in response to determining that the parent request having substantially the same attribute information as the attribute information of the first request exists in the first entry among the plurality of entries;
   a step of determining whether a parent request having substantially the same attribute information as an attribute information of the second request exists in the request queue; and
   a step of storing the second request in a second entry subsequent to the first entry among the plurality of entries as a parent request in response to determining that a parent request having substantially the same attribute information as the attribute information of the second request does not exist in the request queue.
17. The method for operating the memory controller of clause 16, further comprising:
   a step of enqueuing a third request among the plurality of requests received from the host;
   a step of determining whether a parent request having substantially the same attribute information as an attribute information of the third request exists in the request queue; and
   a step of adding the third request to the first entry as a child request so as to be dequeued subsequent to the first request in response to determining that the parent request having substantially the same attribute information as the attribute information of the third request exists in the first entry among the plurality of entries.
18. The method for operating the memory controller of clause 17, further comprising:
   a step of enqueuing a fourth request among the plurality of requests received from the host;
   a step of determining whether a parent request having substantially the same attribute information as an attribute information of the fourth request exists in the request queue;
   a step of determining whether a maximum number of requests is stored in the first entry in which the parent request having substantially the same attribute information as an attribute information of the fourth request is stored; and
   a step of storing the fourth request in a third entry subsequent to the second entry among the plurality of entries as a parent request in response to determining that the maximum number of requests is stored in the first entry.
19. The method for operating the memory controller of clause 16, wherein:
   the attribute information of the request includes at least a target bank address and a target row address of the request.
20. A memory system, including a memory device including a plurality of banks, each of the banks including a plurality of rows and a plurality of columns, and a memory controller configured to manage access requests to the memory controller, wherein:
   the memory controller is configured to store a first access request for a first row and a first column of a first bank, and a second access request for the first row and a second column different from the first column of the first bank in the same entry, and transmit a first command corresponding to the first access request and a second command corresponding to the second access request to the memory device, and
   the memory device is configured to activate the first row of the first bank and access the first column based on the first command, and access the second column based on the second command while the first row is activated by the first command.

## Claims

1. A memory controller (10) comprising:
a request queue (12) configured to enqueue a first request (REQ1) among a plurality of requests (REQ) received from a host (30) into a first entry (ENT_1) of a plurality of entries; and
a queue logic circuit (11) configured to control the request queue (12) to add the first request (REQ1) to the first entry (ENT_1) as a child request (CREQ), based on determining that a parent request (PREQ) having attribute information that is the same as attribute information of the first request (REQ1) already exists in the first entry (ENT_1).

2. The memory controller (10) of claim 1, wherein:
the queue logic circuit (11) is configured to control the request queue (12) to store a second request (REQ2) among the plurality of requests as a parent request (PREQ) in a second entry (ENT_2) subsequent to the first entry (ENT_1), based on determining that a parent request (PREQ) having attribute information that is the same as attribute information of the second request (REQ2) does not exist in the request queue (12).

3. The memory controller (10) of claim 2, wherein:
the queue logic circuit (11) is configured to control the request queue (12) to add a third request (REQ3) among the plurality of requests to the first entry (ENT_1) as a child request (CREQ), based on determining that a parent request (PREQ) having attribute information that is the same as attribute information of the third request (REQ3) exists in the first entry (ENT_1).

4. The memory controller (10) of claim 3, wherein:
the queue logic circuit (11) is configured to dequeue the first request (REQ1) before the third request (REQ3).

5. The memory controller (10) of claim 3 or 4, wherein:
the queue logic circuit (11) is configured to dequeue the third request (REQ3) before the second request (REQ2).

6. The memory controller (10) of claim 3, 4 or 5, wherein:
the queue logic circuit (11) is configured to control the request queue (12) to store a fourth request (REQ3) among the plurality of requests as a parent request (PREQ) in a third entry subsequent to the second entry (ENT_2), based on determining that a parent request (PREQ) having attribute information that is the same as attribute information of the fourth request (REQ4) exists in the first entry (ENT_1) and based on determining that a maximum number of requests is stored in the first entry (ENT_1).

7. The memory controller (10) of any preceding claim, wherein:
the memory controller (10) is configured so that the maximum number of requests is 4.

8. The memory controller (10) of any preceding claim, wherein:
the memory controller (10) is configured so that each of the plurality of entries includes an attribute information field, a column address field of the parent request (PREQ), a column address field of the child request (CREQ), a valid bit field, and a response ID field.

9. The memory controller (10) of claim 8, wherein:
the memory controller (10) is configured so that a valid bit value stored in the valid bit field of the first entry (ENT_1) is changed based on the parent request (PREQ) of the first entry (ENT_1) being dequeued.

10. The memory controller (10) of claim 8 or 9, wherein:
the memory controller (10) is configured so that the valid bit value stored in the valid bit field of the first entry (ENT_1) is changed based on the first request (REQ1) being dequeued subsequent to the parent request (PREQ) of the first entry (ENT_1).

11. The memory controller (10) of any preceding claim, wherein:
the memory controller (10) is configured so that the attribute information of the first request (REQ1) includes a target bank address and a target row address of the first request (REQ1).

12. The memory controller (10) of any preceding claim, wherein:
the memory controller (10) is configured so that the first request (REQ1) is a read request for a memory device connected to the memory controller (10).

13. The memory controller (10) of any preceding claim, wherein:
the memory controller (10) is configured so that the request queue (12) operates in a First-Ready-First-Come-First-Served manner.

14. The memory controller (10) of any preceding claim, wherein:
the memory controller (10) is configured so that the parent request (PREQ) and the first request (REQ1) that are stored in the first entry (ENT_1) are requests to access different columns in a same bank and a same row of a memory device connected to the memory controller (10).

15. A method for operating a memory controller (10), the method comprising:
enqueuing a first request (REQ1) and a second request (REQ2) among a plurality of requests received from a host (30) into a request queue (12) including a plurality of entries;
determining whether a parent request (PREQ) having attribute information that is the same as attribute information of the first request (REQ1) already exists in the request queue (12);
adding the first request (REQ1) as a child request (CREQ) to a first entry (ENT_1) of the plurality of entries based on determining that the parent request (PREQ) having the attribute information that is the same as the attribute information of the first request (REQ1) exists in the first entry (ENT_1);
determining whether a parent request (PREQ) having attribute information that is the same as attribute information of the second request (REQ2) exists in the request queue (12); and
storing the second request (REQ2) as a parent request (PREQ) in a second entry (ENT_2) subsequent to the first entry (ENT_1) among the plurality of entries based on determining that the parent request (PREQ) having the attribute information that is the same as the attribute information of the second request (REQ2) does not exist in the request queue (12).
